# EUROPÄISCHE PATENTANMELDUNG

(11) **EP 1 033 803 A2**
(43) Veröffentlichungstag der Anmeldung: **06.09.2000**
(21) Anmeldenummer: 00103269.7
(22) Anmeldetag: 17.02.2000
(51) Int. Cl.: H02H 3/00, B60R 16/02

(54) **Sicherungssystem für Kraftfahrzeuge**

(30) Priorität: 04.03.1999 DE 19909590
(71) Anmelder: Delphi Technologies, Inc., Troy, MI 48007 (US)
(72) Erfinder: Dinger, Jürgen, 42899 Remscheid (DE); Alksnat, Holger, 58285 Gevelsberg (DE)
(74) Vertreter: Manitz, Finsterwald & Partner

(57) **Zusammenfassung**

Die Erfindung betrifft ein Sicherungssystem zur Absicherung von an eine Stromquelle angeschlossenen elektrischen Bauteilen für Kraftfahrzeuge mit wenigstens einem elektrischen Leiter und zumindest einer Trennvorrichtung, die eine bevorzugt elektrisch ansteuerbare und im Bereich des Leiters angeordnete Unterbrechereinheit zum Unterbrechen des Leiters in Abhängigkeit von vorgebbaren Betriebszuständen aufweist.

## Beschreibung

Die Erfindung betrifft ein Sicherungssystem zur Absicherung von an eine Stromquelle angeschlossenen elektrischen Bauteilen für Kraftfahrzeuge.

Sicherungssysteme zur Absicherung elektrischer Leitungssysteme bzw. elektrischer Verbraucher gegen zu hohe Ströme sind grundsätzlich bekannt. In Kraftfahrzeugen werden üblicherweise Schmelzsicherungen eingesetzt, die einzeln auswechselbar in einem Sicherungskasten angeordnet sind.

Es ist das der Erfindung zugrundeliegende Problem (Aufgabe), ein eine optimale Absicherung bietendes Sicherungssystem zu schaffen, das variabel und vielseitig einsetzbar ist.

Die Lösung dieser Aufgabe erfolgt durch die Merkmale des Anspruchs 1 und insbesondere dadurch, daß das Sicherungssystem wenigstens einen elektrischen Leiter und zumindest eine Trennvorrichtung umfaßt, die eine bevorzugt elektrisch ansteuerbare und im Bereich des Leiters angeordnete Unterbrechereinheit zum Unterbrechen des Leiters in Abhängigkeit von vorgebbaren Betriebszuständen aufweist.

Durch die Erfindung wird ein intelligentes Sicherungssystem geschaffen, bei dem der elektrische Leiter gezielt und insbesondere automatisch dann unterbrochen werden kann, wenn die jeweiligen Betriebszustände es erfordern. Im Gegensatz zu herkömmlichen Schmelzsicherungen, die erst dann auslösen, wenn ein durch die Ausführung der Sicherung selbst bestimmter Strom überschritten wird, kann erfindungsgemäß mit der Trennvorrichtung der elektrische Leiter unabhängig von seinen Eigenschaften, beispielsweise dem Material, aus dem er besteht, und seinem Querschnitt, unterbrochen werden. Des weiteren wird durch die Erfindung die Möglichkeit geschaffen, beliebige Betriebszustände der Umgebung, in welche das erfindungsgemäße Sicherungssystem integriert ist, zu berücksichtigen, indem die Unterbrechereinheit entsprechend angesteuert wird. Ein weiterer Vorteil der Erfindung besteht darin, daß der Querschnitt von an den elektrischen Leiter angeschlossenen Kabeln besser an die zu erwartenden Bedingungen angepaßt werden kann und nicht überdimensioniert zu werden braucht. In Verbindung mit herkömmlichen Sicherungssystemen werden unnötig große Kabelquerschnitte benötigt, damit die herkömmliche Schmelzsicherung durchschmilzt, bevor das Kabel beschädigt wird. So werden beispielsweise in Verbindung mit 30 A-Sicherungen Leitungen verwendet, die für etwa 40 A ausgelegt sind, obwohl derartige Ströme im normalen Betrieb nicht auftreten. Da erfindungsgemäß der elektrische Leiter auch unabhängig von dem durch ihn fließenden Strom unterbrechbar ist, kann dafür gesorgt werden, daß der Leiter unterbrochen wird, sobald die maximale Belastbarkeit der angeschlossenen Kabel erreicht ist. Die Erfindung ermöglicht so eine wirtschaftlichere Herstellung von elektrischen Leitungssystemen, beispielsweise für Bordnetze von Kraftfahrzeugen.

Gemäß einer bevorzugten Ausführungsform der Erfindung ist die Trennvorrichtung zur Überwachung und insbesondere zum Erkennen von Überlastzuständen in einem den Leiter enthaltenden Leitungssystem ausgebildet.

Auf diese Weise kann ein den unterbrechbaren elektrischen Leiter enthaltendes Leitungssystem an einer beliebigen Stelle und insbesondere an einer Vielzahl von beliebigen Stellen überwacht werden, um gegebenenfalls die Unterbrechereinheit zu aktivieren und somit für eine Unterbrechung des elektrischen Leiters zu sorgen. Hierzu kann eine zentrale Steuereinheit vorgesehen sein, welche die jeweiligen Betriebszustände an den zu überwachenden Stellen des Leitungssystems, z.B. dem Bordnetz eines Kraftfahrzeuges, erfaßt und die Unterbrechereinheit zum Unterbrechen des elektrischen Leiters ansteuert, wenn - z.B. im Fall von Kurzschlüssen - eine Absicherung erforderlich ist. Hierbei kann die Steuereinheit zur Erzeugung von Trennsignalen ausgebildet sein, die in Abhängigkeit von den von der Steuereinheit erfaßten Betriebszuständen erzeugt und an die im Bereich des elektrischen Leiters angeordnete Unterbrechereinheit der Trennvorrichtung übermittelt werden.

Gemäß einem weiteren bevorzugten Ausführungsbeispiel der Erfindung ist die Trennvorrichtung in Abhängigkeit von vorgebbaren Betriebszuständen entsprechenden Werten aktivierbar, die in der Trennvorrichtung gespeichert und insbesondere durch Programmieren der Trennvorrichtung veränderbar sind.

Auf diese Weise können bestimmte Szenarien vorgegeben werden, bei deren Vorliegen automatisch die Trennvorrichtung aktiviert und somit der elektrische Leiter unterbrochen wird. Die in der Trennvorrichtung gespeicherten Werte können beispielsweise maximale Ströme darstellen, die an bestimmten, von der Trennvorrichtung überwachten Stellen eines den elektrischen Leiter enthaltenden Leitungssystems nicht überschritten werden dürfen. Durch das Vorsehen einer programmierbaren Trennvorrichtung können die Werte und somit die Bedingungen, unter denen eine Absicherung durch Unterbrechen des elektrischen Leiters erfolgt, auf einfache Weise und insbesondere ohne Auswechseln einzelner Sicherungen geändert werden. Dadurch ist das erfindungsgemäße Sicherungssystem besonders variabel und vielseitig einsetzbar. Es kann somit die gleiche, den elektrischen Leiter und die Trennvorrichtung umfassende Hardware für die verschiedensten Umgebungen genutzt werden.

Gemäß einer weiteren bevorzugten Ausführungsform der Erfindung, welche den Einsatz des Sicherungssystems in Kraftfahrzeugen betrifft, ist die Trennvorrichtung zur Erfassung von Betriebsstörungen, insbesondere von Unfällen, des Kraftfahrzeuges ausgebildet.

Hierdurch können einzelne Abschnitte des Bordnetzes bzw. einzelne Verbraucher im Kraftfahrzeug bei einem Unfall sofort und gezielt durch Unterbrechen des jeweiligen elektrischen Leiters automatisch abgeschaltet werden. Auf diese Weise kann beispielsweise verhindert werden, daß auslaufender Kraftstoff bzw. Kraftstoffdämpfe durch noch aktive elektrische Bauteile entzündet werden. Diese zusätzliche Schutzfunktion kann erfindungsgemäß unabhängig von den den elektrischen Leiter durchfließenden Strömen bereitgestellt werden.

Gemäß einer bevorzugten Variante ist die Trennvorrichtung zur Kommunikation mit einer Rückhalteeinrichtung, insbesondere mit einem Airbag-System, ausgelegt. Die das Auslösen eines Airbags bewirkenden Signale können somit gleichzeitig an die Trennvorrichtung des erfindungsgemäßen Sicherungssystems übermittelt werden, um auf diese Weise bei einem Unfall für die Trennung des jeweiligen Leitungsabschnitts bzw. elektrischen Verbrauchers von der Stromquelle zu sorgen.

Gemäß einer weiteren bevorzugten Ausführungsform der Erfindung umfaßt die Unterbrechereinheit einen Aktuator zur Betätigung eines relativ zum Leiter bewegbaren Unterbrecherelementes.

Als ein derartiger Aktuator kann beispielsweise ein Elektromotor vorgesehen sein, der angesteuert werden kann, um das Unterbrecherelement derart zu beaufschlagen, daß es den elektrischen Leiter durchtrennt. Anstelle einer derartigen mechanischen Unterbrechung des elektrischen Leiters kann die Sicherungsfunktion auch durch eine elektrische, thermische und/oder chemische Einwirkung auf den elektrischen Leiter erfolgen.

Gemäß einer weiteren bevorzugten Ausführungsform der Erfindung ist der Leiter insbesondere im Bereich einer vorgegebenen Trennstelle, an welcher der Leiter mittels der Trennvorrichtung unterbrechbar ist, als Schmelzsicherung ausgebildet.

Hierdurch kann von dem erfindungsgemäßen Sicherungssystem sowohl die Funktion einer herkömmlichen Schmelzsicherung erfüllt als auch - mit Hilfe der Trennvorrichtung - für eine zusätzliche Absicherungsmöglichkeit gesorgt werden, die von den elektrischen Leiter durchfließenden und diesen ab einer bestimmten Stromstärke zum Schmelzen bringenden Strömen unabhängig ist.

Gemäß einer weiteren bevorzugten Ausführungsform der Erfindung umfaßt der Leiter mehrere Einzelleiter, die unabhängig voneinander unterbrechbar sind, wobei bevorzugt jedem Einzelleiter eine Unterbrechereinheit der Trennvorrichtung zugeordnet ist. Die einzelnen Unterbrechereinheiten können mit einer gemeinsamen Steuereinheit verbunden sein.

Auf diese Weise können einzelne Abschnitte beispielsweise eines KFZ-Bordnetzes, einzelne elektrische Verbraucher oder zu Untersystemen zusammengefaßte elektrische Verbraucher unabhängig voneinander abgesichert werden. Dabei kann jedem Einzelleiter und somit jedem Leitungsabschnitt bzw. Verbraucher ein eigenes Absicherungsszenario zugeordnet werden, indem entsprechende Betriebszustände vorgegeben werden, bei denen eine Unterbrechung des jeweiligen Einzelleiters erfolgen soll.

Gemäß einer weiteren bevorzugten Ausführungsform der Erfindung ist der Leiter als Stromverteiler ausgebildet, wobei der Leiter mehrere mit wenigstens einem gemeinsamen Hauptleiter verbundene Einzelleiter umfaßt.

Hierdurch braucht lediglich der Hauptleiter mit einem Stromgenerator oder einer Batterie beispielsweise eines Kraftfahrzeuges verbunden zu werden, um die Einzelleiter und somit die an die Einzelleiter angeschlossenen elektrischen Einheiten mit Strom zu versorgen. In einer bevorzugten Variante sind sowohl der Hauptleiter als auch die Einzelleiter jeweils streifenförmig ausgebildet, wobei die Einzelleiter wie die Zinken eines Kammes von einem Seitenrand des Hauptleiters abstehen. Durch Vorsehen der einzelnen Unterbrechereinheiten im Bereich des Hauptleiters kann die Unterbrechung der Einzelleiter und somit das Abschneiden der entsprechenden elektrischen Einheit von der Stromquelle nahe der Stromquelle erfolgen, in einem Kraftfahrzeug somit in Batterienähe.

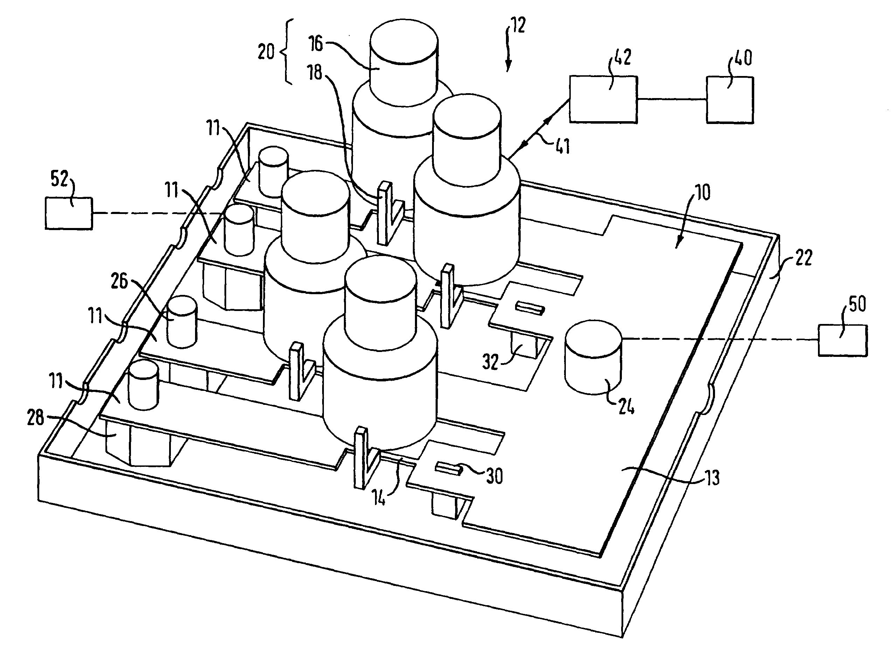

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben, deren einzige Figur eine perspektivische und teilweise schematische Ansicht eines Sicherungssystems gemäß einer Ausführungsform der Erfindung zeigt.

Das erfindungsgemäße Sicherungssystem umfaßt eine Trennvorrichtung 12 mit vier nachfolgend näher beschriebenen, baugleich ausgeführten Unterbrechereinheiten 20, die mit einer gemeinsamen elektronischen Steuereinheit 42 verbunden sind, wie es in der Figur am Beispiel einer Unterbrechereinheit 20 durch eine Verbindungsleitung 41 angedeutet ist. Die Steuereinheit 42 kann mit einer Rückhalteeinrichtung eines nicht dargestellten Kraftfahrzeuges kommunizieren, beispielsweise mit einem in der Figur lediglich schematisch angedeuteten Airbag-System 40 und/oder mit einem Gurtstraffer.

Des weiteren umfaßt das Sicherungssystem einen elektrischen Leiter 10, der in Form einer Streifensicherung ausgebildet ist und einen breiten streifenförmigen Hauptleiter 13 sowie in dieser Ausführungsform vier schmale streifenförmige Einzelleiter 11 aufweist, die wie die Zinken eines Kammes von einer Längsseite des Hauptleiters 13 ausgehen und jeweils senkrecht zum Hauptleiter 13 verlaufen. Der elektrische Leiter 10 ist in einem flachen Sicherungskasten 22 mit rechteckiger Grundfläche untergebracht, dessen Abdeckung nicht dargestellt ist.

Die freien Enden der Einzelleiter 11 sind mit kreisförmigen Aussparungen versehen, mit welchen sie auf zylindrische Einzelanschlüsse 26 gesteckt sind. Die Einzelanschlüsse 26 sind jeweils mit Sockeln 28 verbunden, auf denen die Einzelleiter 11 aufliegen und deren Querschnittsfläche die Form eines regelmäßigen Vielecks aufweist.

Zwei der Einzelleiter 11 liegen im Bereich des Hauptleiters 13 ebenfalls auf Sockeln 32 auf, von denen jeweils ein Vorsprung 30 mit einem Querschnitt in Form eines schmalen Rechtecks absteht, der durch eine entsprechende Aussparung in dem jeweiligen Einzelleiter 11 hindurchragt.

Etwa mittig in Längsrichtung ist der Hauptleiter 13 mit einer kreisförmigen Aussparung versehen, mit welcher der Hauptleiter 13 auf einen zylindrischen Anschluß 24 gesteckt ist, dessen Durchmesser größer als derjenige der zylindrischen Anschlüsse 26 im Bereich der freien Enden der Einzelleiter 11 ist. Der Hauptleiter 13 liegt ebenfalls auf einem nicht dargestellten Sockel auf, mit welchem der Anschluß 24 verbunden ist.

Der elektrische Leiter 10 kann über den Anschluß 24 an eine in der Figur schematisierte Stromquelle 50, insbesondere den Stromgenerator oder die Batterie eines Kraftfahrzeuges, angeschlossen werden und dient somit als Stromverteiler, über den einzelne Leitungsabschnitte des KFZ-Bordnetzes, einzelne elektrische Verbraucher oder zu einzelnen Einheiten zusammengefaßte elektrische Verbraucher mit Strom versorgt werden. Die einzelnen elektrischen Bauteile werden hierzu an die Einzelanschlüsse 26 angeschlossen und somit über den jeweiligen Einzelleiter 11 mit Strom versorgt, wie es in der Figur am Beispiel eines Einzelleiters 11 durch ein schematisiertes elektrisches Bauteil 52 angedeutet ist. Der streifenförmige Hauptleiter 13 wird auch als "Terminal Busbar", d.h. als streifenförmiger Anschluß-Bus bezeichnet, durch den die Einzelleiter 11 zentral mit Strom versorgt werden.

Der einstückige elektrische Leiter 10 wird durch Ausstanzen aus einem die jeweils gewünschte Dicke aufweisenden tafelförmigen Ausgangsmaterial hergestellt.

Jeder Einzelleiter 11 ist mit einer stegartigen Verjüngung 14 versehen, deren Breite in der Größenordnung der Dicke des elektrischen Leiters 10 liegt, so daß die Einzelleiter 11 jeweils an der Verjüngung 14 mit einem drahtförmigen Leitungsabschnitt versehen sind.

Die Verjüngung 14 ist in Abhängigkeit insbesondere von dem Material des Leiters 10 derart bemessen, daß der Einzelleiter 11 an der Verjüngung 14 durchschmilzt, sobald der durch den Einzelleiter 11 fließende Strom eine bestimmte Stromstärke übersteigt. Jeder Einzelleiter 11 stellt somit eine Schmelzsicherung dar.

Im Bereich der Verjüngung 14 der Einzelleiter 11 ist jeweils eine Unterbrechereinheit 20 des erfindungsgemäßen Sicherungssystems angeordnet, die einen Aktuator 16, z.B. einen Elektromotor, sowie ein durch den Aktuator 16 beaufschlagbares Unterbrecherelement 18 umfaßt. Das Unterbrecherelement 18 ist durch Aktivieren des Aktuators 16 aufgrund eines entsprechenden Trennsignals von der Steuereinheit 42 derart relativ zum elektrischen Leiter 10 bewegbar, daß es den jeweiligen Einzelleiter 11 an der Verjüngung 14 durchtrennt. Durch die versetzte Anordnung der Verjüngungen 14 und somit der Unterbrechereinheiten 20 können der elektrische Leiter 10 und die Unterbrechereinheiten 20 zu einer kompakten Einheit mit geringem Platzbedarf zusammengefaßt werden.

Alternativ können die Unterbrechereinheiten 20 auch derart ausgeführt sein; daß sie auf andere Weise mechanisch oder auf elektrischem, thermischem oder chemischem Wege auf den jeweiligen Einzelleiter 11 bzw. die Verjüngung 14 einwirken, um eine Unterbrechung der elektrischen Verbindung zwischen dem Hauptleiter 13 und dem mit dem jeweiligen Einzelanschluß 26 gekoppelten freien Ende des Einzelleiters 11 zu erzielen.

Die Steuereinheit 42 des erfindungsgemäßen Sicherungssystems dient dazu, den Betriebszustand des Kraftfahrzeuges, in welches das erfindungsgemäße Sicherungssystem integriert ist, zu überwachen. Hierzu können an beliebigen Stellen des elektrischen Systems bzw. KFZ-Bordnetzes zur Strommessung ausgebildete Sensoren vorgesehen sein, die von der Steuereinheit 42 zyklisch abgefragt werden. Im Fall von Überlastzuständen und/oder Kurzschlüssen können die betroffenen Abschnitte gezielt durch Ansteuern der jeweiligen Unterbrechereinheit 20 durch Übermittlung eines in der Steuereinheit 42 erzeugten Trennsignals von der über den Anschluß 24 und den Hauptleiter 13 erfolgenden Stromversorgung abgeschnitten werden.

Die Steuereinheit 42 kann außerdem zur Überwachung der durch die Einzelleiter 11 fließenden Ströme dienen, wobei hierzu, z.B. durch die Unterbrechereinheiten 20, entsprechende Daten ermittelt und zur Steuereinheit 42 übertragen werden können. Des weiteren können durch Temperaturmessungen die Temperaturen der Einzelleiter 11 überwacht werden. Durch den Doppelpfeil in der Verbindungsleitung 41 ist die Möglichkeit des Datenaustausches angedeutet.

Bei der Erfassung und Bewertung der als Grundlage für eine mögliche Aussendung von Trennsignalen an die Unterbrechereinheiten 20 dienenden Betriebszustände kann außerdem die Umgebungstemperatur berücksichtigt werden, die beispielsweise jeweils mit einem nicht dargestellten Temperatursensor an der oder den interessierenden Stellen ermittelt wird.

Das erfindungsgemäße Sicherungssystem ist außerdem zur Erfassung einer weiteren Art von Betriebszuständen des Kraftfahrzeuges in der Lage, nämlich zum Erkennen von Unfällen. Diese können dem Sicherungssystem dadurch angezeigt werden, daß die Steuereinheit 42 mit einer Rückhalteeinrichtung des Kraftfahrzeuges für die Insassen kommunizieren kann, beispielsweise mit einem Gurtstraffer und/oder dem Airbag-System 40. Die bei einer unfallbedingten Verzögerung des Kraftfahrzeuges von einer derartigen Rückhalteeinrichtung 40 erzeugten bzw. verwendeten Auslösesignale werden an die Steuereinheit 42 übermittelt bzw. das Vorliegen derartiger Auslösesignale wird von der Steuereinheit 42 zyklisch abgefragt, so daß bei einem Unfall alle oder gemäß einem vorbestimmten Schema ausgewählte Unterbrechereinheiten 20 angesteuert werden können, um durch Durchtrennen der Verjüngung 14 die entsprechende elektrische Einheit von der Stromversorgung abzuschneiden. Das Entzünden von Kraftstoff oder Kraftstoffdämpfen durch die Bordelektrik kann auf diese Weise automatisch verhindert werden.

### Bezugszeichenliste

- 10: Leiter
- 11: Einzelleiter
- 12: Trennvorrichtung
- 13: Hauptleiter
- 14: Trennstelle, Verjüngung
- 16: Aktuator
- 18: Unterbrecherelement
- 20: Unterbrechereinheit
- 22: Sicherungskasten
- 24: Anschluß
- 26: Einzelanschlüsse
- 28: Sockel
- 30: Vorsprünge
- 32: Sockel
- 40: Airbag- System
- 41: Verbindungsleitung
- 42: Steuereinheit
- 50: Stromquelle
- 52: elektrisches Bauteil

## Patentansprüche

1. Sicherungssystem zur Absicherung von an eine Stromquelle (50) angeschlossenen elektrischen Bauteilen (52) für Kraftfahrzeuge mit wenigstens einem elektrischen Leiter (10) und zumindest einer Trennvorrichtung (12), die eine bevorzugt elektrisch ansteuerbare und im Bereich des Leiters (10) angeordnete Unterbrechereinheit (20) zum Unterbrechen des Leiters (10) in Abhängigkeit von vorgebbaren Betriebszuständen aufweist.

2. Sicherungssystem nach Anspruch 1,
dadurch gekennzeichnet, daß die Unterbrechereinheit (20) zum Durchtrennen des Leiters (10) ausgebildet ist, insbesondere durch mechanische, elektrische, thermische und/oder chemische Einwirkung auf den Leiter (10).

3. Sicherungssystem nach Anspruch 1 oder 2,
dadurch gekennzeichnet, daß die Trennvorrichtung (12) zur Überwachung und insbesondere zum Erkennen von Überlastzuständen in einem den Leiter (10) enthaltenden Leitungssystem ausgebildet ist.

4. Sicherungssystem nach zumindest einem der vorhergehenden Ansprüche,
dadurch gekennzeichnet, daß die Trennvorrichtung (12) zur Überwachung von den Leiter (10) durchfließenden Strömen und/oder der Temperatur des Leiters (10) insbesondere im Bereich einer vorgegebenen Trennstelle (14) ausgebildet ist.

5. Sicherungssystem nach zumindest einem der vorhergehenden Ansprüche,
dadurch gekennzeichnet, daß die Trennvorrichtung (12) in Abhängigkeit von vorgebbaren Betriebszuständen entsprechenden Werten aktivierbar ist, die in der Trennvorrichtung (12) gespeichert und insbesondere durch Programmieren der Trennvorrichtung (12) veränderbar sind.

6. Sicherungssystem für Kraftfahrzeuge nach zumindest einem der vorhergehenden Ansprüche,
dadurch gekennzeichnet, daß die Trennvorrichtung (12) zur Erfassung von Betriebsstörungen, insbesondere von Unfällen, des Kraftfahrzeuges ausgebildet ist.

7. Sicherungssystem nach Anspruch 6,
dadurch gekennzeichnet, daß die Trennvorrichtung (12) zur Kommunikation mit einer Rückhalteeinrichtung, insbesondere mit einem Airbag-System (40), ausgelegt ist.

8. Sicherungssystem nach zumindest einem der vorhergehenden Ansprüche,
dadurch gekennzeichnet, daß die Trennvorrichtung (12) eine Steuereinheit (42) zur Erfassung der Betriebszustände und zur Ansteuerung der Unterbrechereinheit (20) umfaßt.

9. Sicherungssystem nach Anspruch 8,
dadurch gekennzeichnet, daß die Steuereinheit (42) zur Übermittlung von in Abhängigkeit von den Betriebszuständen erzeugten Trennsignalen an die Unterbrechereinheit (20) ausgebildet ist.

10. Sicherungssystem nach zumindest einem der vorhergehenden Ansprüche,
dadurch gekennzeichnet, daß die Unterbrechereinheit (20) einen Aktuator (16), insbesondere einen Elektromotor, zur Betätigung eines relativ zum Leiter (10) bewegbaren Unterbrecherelementes (18) umfaßt.

11. Sicherungssystem nach zumindest einem der vorhergehenden Ansprüche,
dadurch gekennzeichnet, daß der Leiter (10), insbesondere im Bereich einer vorgegebenen Trennstelle (14), an welcher der Leiter (10) mittels der Trennvorrichtung (12) unterbrechbar ist, als Schmelzsicherung ausgebildet ist.

12. Sicherungssystem nach zumindest einem der vorhergehenden Ansprüche,
dadurch gekennzeichnet, daß der Leiter (10) wenigstens eine vorzugsweise steg- oder drahtförmige Verjüngung (14) aufweist, an welcher der Leiter (10) mittels der Trennvorrichtung (12) unterbrechbar ist.

13. Sicherungssystem nach zumindest einem der vorhergehenden Ansprüche,
dadurch gekennzeichnet, daß der Leiter (10) mehrere Einzelleiter (11) umfaßt, die unabhängig voneinander unterbrechbar sind, wobei bevorzugt jedem Einzelleiter (11) eine Unterbrechereinheit (20) der Trennvorrichtung (12) zugeordnet ist.

14. Sicherungssystem nach zumindest einem der vorhergehenden Ansprüche,
dadurch gekennzeichnet, daß der Leiter (10) als Stromverteiler ausgebildet ist und mehrere mit wenigstens einem gemeinsamen Hauptleiter (13) verbundene Einzelleiter (11) umfaßt, wobei bevorzugt der Hauptleiter (13) und die Einzelleiter (11) jeweils zumindest im wesentlichen streifenförmig ausgebildet sind.

15. Sicherungssystem nach Anspruch 13 oder 14,
dadurch gekennzeichnet, daß der Leiter (10) zusammen mit Unterbrechereinheiten (20) der Trennvorrichtung (12) zu einer kompakten Einheit zusammengefaßt und in einem Sicherungskasten (22) untergebracht ist, wobei bevorzugt die Unterbrechereinheiten (20) bezüglich der Längsrichtung der Einzelleiter (11) zueinander versetzt angeordnet sind.
